# EUROPEAN PATENT SPECIFICATION

(11) **EP 1 209 875 B1**
(45) Date of publication and mention of the grant of the patent: **20.10.2004**
(21) Application number: 01127725.8
(22) Date of filing: 21.11.2001
(51) Int. Cl.: H04L 29/06

(54) **Regional tunnel management method in a mobile communication system using mobile IP**
Regionales Tunnelsteuerungverfahren in einem Mobilkommunikationssystem mit Mobile-IP
Procédé de gestion de tunnel régional dans un système de communication mobile utilisant IP mobile

(30) Priority: 21.11.2000 KR 2000069309
(43) Date of publication of application: 29.05.2002
(73) Proprietor: SAMSUNG ELECTRONICS CO., LTD., Suwon-City, Kyungki-do (KR)
(72) Inventor: Jung, Tae-Sung, Sangju-shi, Kwongsangbuk-do (KR)
(74) Representative: Grünecker, Kinkeldey, Stockmair & Schwanhäusser Anwaltssozietät

(56) References cited:
- Internet Draft: Mobile IP Regional Registration; E. Gustafsson, A. Jonsson, C. Perkins; July 13, 2000; draft-ietf-mobileip-reg-tunnel-03.txt XP002195254
- Internet Draft: Regional Aware Foreign Agent (RAFA) for Fast Local Handoffs; S. Foo, K. Chua; November 1998; draft-chuafoo-mobileip-rafa-00.txt XP002195255
- FORSBERG D ET AL: "Distributing mobility agents hierarchically under frequent location updates" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15 November 1999 (1999-11-15), pages 159-168, XP010370724 ISBN: 0-7803-5904-6

## Description

The present invention relates generally to a mobile communication system using Mobile IP, and in particular, to a regional tunnel management method for transmitting data from a correspondent node (CN) to a mobile node (MN).

A Mobile IP technique has been introduced to provide mobility to the clients that access an IP (Internet Protocol) network. Since the IP network has a fixed IP address for a specific region, the clients accessing the IP network must be inconveniently assigned a new IP address while on the move. However, the Mobile IP network can exchange data with a server in the IP network using the existing fixed Mobile IP address without changing the Mobile IP address, even while the clients are on the move.

Before describing the Mobile IP technique, the terms used in the Mobile IP technique will be defined below.
- A mobile node (MN) has a unique IP address to receive data from clients in the IP network, and it has mobility.
- A foreign agent (FA), a node constituting the IP network, is wirelessly connected to the mobile node in a specific region and has a unique IP address. The foreign agent stores information on the mobile nodes.
- A home agent (HA) is a node for managing location information of the mobile nodes. Upon receiving data to be transmitted to the mobile node from a correspondent node (CN), the home agent retransmits the received data to a gateway foreign agent (GFA) to which the mobile node belongs, using the location information of the mobile node managed by it.
- A gateway foreign agent (GFA), a node indispensable for the regional tunnel management, serves as the home agent, upon receiving a location registration request from the mobile node in a preset region, e.g., a visit network.
- A correspondent node (CN) is a host in the IP network, desiring to communicate with the mobile node.
- Regional tunnel management refers to a method for transmitting a location registration message only up to the gateway foreign agent to which the mobile node belongs, not up to the home agent, when the mobile node moves from a region managed by the gateway foreign agent, changing the foreign agent to which the mobile node belongs.

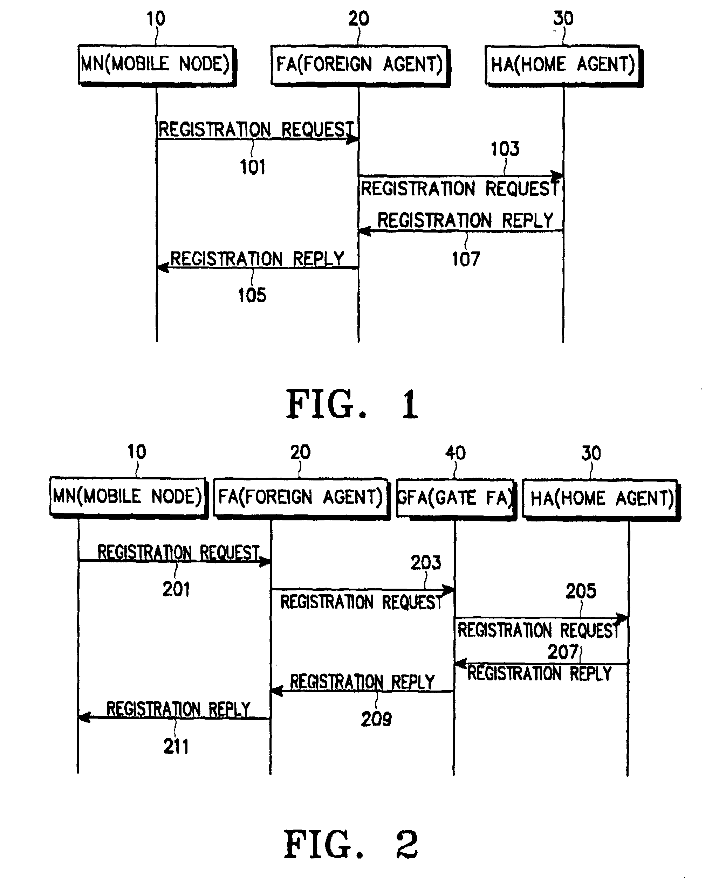

A regional tunnel management method in a communication system using the common Mobile IP will be described with reference to FIGs. 1 to 4.

FIG. 1 illustrates a location registration procedure in a communication system using the common Mobile IP. Referring to FIG. 1, if a mobile node 10 enters a region of a foreign agent 20, the foreign agent 20 broadcasts specific information to the mobile node 10 through a broadcast channel. Upon receiving the information broadcast by the foreign agent 20, the mobile node 10 determines to which foreign agent it belongs by analyzing the received information. If the mobile node 10 recognizes a region of the foreign agent to which it belongs, i.e., recognizes that it exists in a region of the foreign agent 20, the mobile node 10 transmits a Registration Request message to the foreign agent 20 in step 101. The Registration Request message includes authentication information of the mobile node 10. Upon receiving the Registration Request message, the foreign agent 20 stores information on the mobile node 10, included in the received Registration Request message, and then transmits a Registration Request message for requesting location registration of the mobile node 10 to a home agent 30 to which it belongs, in step 103. Here, the Registration Request message transmitted by the foreign agent 20 includes an IP address of the foreign agent 20 to which the mobile node 10 belongs. The home agent 30 performs an authentication process using the information on the mobile node 10, included in the Registration Request message, and detects location information, i.e., an address of the foreign agent 20 to which the mobile node 10 belongs from the Registration Request message, and then stores the detected location information. If the authentication process for the mobile node 10 has been normally performed, then the home agent 30 transmits a Registration Reply message to the foreign agent 20 in step 107. Upon receiving the Registration Reply message, the foreign agent 20 transmits the Registration Reply message to the mobile node 10 in step 105. If the location of the mobile node 10 is registered in the home agent 30 through this process, the mobile node 10 can exchange data with a host of the IP network, i.e., the correspondent node, through the home agent 30. Generally, for data reception from the correspondent node, the mobile node 10 receives data from the correspondent node via the home agent 30 and the foreign agent 20. However, for data transmission to the correspondent node, the mobile node 10 can transmit data to the correspondent node either via the foreign agent 20 and the home agent 30, or via the foreign agent 20 and a router, which corresponds to a peer node in the IP network. In addition, when the correspondent node is connected to another foreign agent, the mobile node 10 can directly exchange data with the foreign agent 20 and a foreign agent to which the correspondent node is connected.

Meanwhile, if the mobile node 10 moves to a region of another foreign agent, it must exchange messages with the home agent 30 in order to register its location information in the home agent 30 each time it moves. However, if the mobile node 10 is located far away from the home agent 30, e.g., if the mobile node 10 is located in South Korea and the home agent 30 is located in the United States, long propagation delay occurs during exchange of the Registration messages between them. In order to solve this problem, the Mobile IP technique uses a regional tunnel management method. The regional tunnel management method performs a procedure for registering the location of the moving mobile node by providing the gateway foreign agent in addition to the foreign agent. This method sets a region having a specific size as a visit network, and then, if the mobile node moves within the visit network, the location of the mobile node is registered not in the home agent, but in the gateway foreign agent. For example, when there exist 5 foreign agents in the visit network, no matter which foreign agent the mobile node moves to, the location of the mobile node is not newly registered in the home agent but registered only in the gateway foreign agent. The regional tunnel management method will be described in detail with reference to FIG. 2.

FIG. 2 illustrates an initial location registration procedure based on the regional tunnel management in a mobile communication system using the common Mobile IP. Referring to FIG. 2, if a mobile node 10 enters a region of a foreign agent 20, the mobile node 10 transmits a Registration Request message to the foreign agent 20 after receiving information broadcast by the foreign agent 20, in step 201. Upon receiving the Registration Request message from the mobile node 10, the foreign agent 20 transmits the Registration Request message to a gateway foreign agent 40 in step 203. The gateway foreign agent 40 stores an address of the foreign agent 20 and information on the mobile node 10, and then transmits the Registration Request message to a home agent 30 along with its address in step 205. The home agent 30 then stores location information of the mobile node 10, included in the received Registration Request message. The location information of the mobile node 10, stored in the home agent 30, becomes an address of the gateway foreign agent 40 to which the mobile node 10 belongs. After completing the location registration, the home agent 30 transmits a Registration Reply message to the gateway foreign agent 40 in step 207, and the gateway foreign agent 40 transmits the Registration Reply message to the foreign agent 20 in step 209. The foreign agent 20 then transmits the Registration Reply message to the mobile node in step 211.

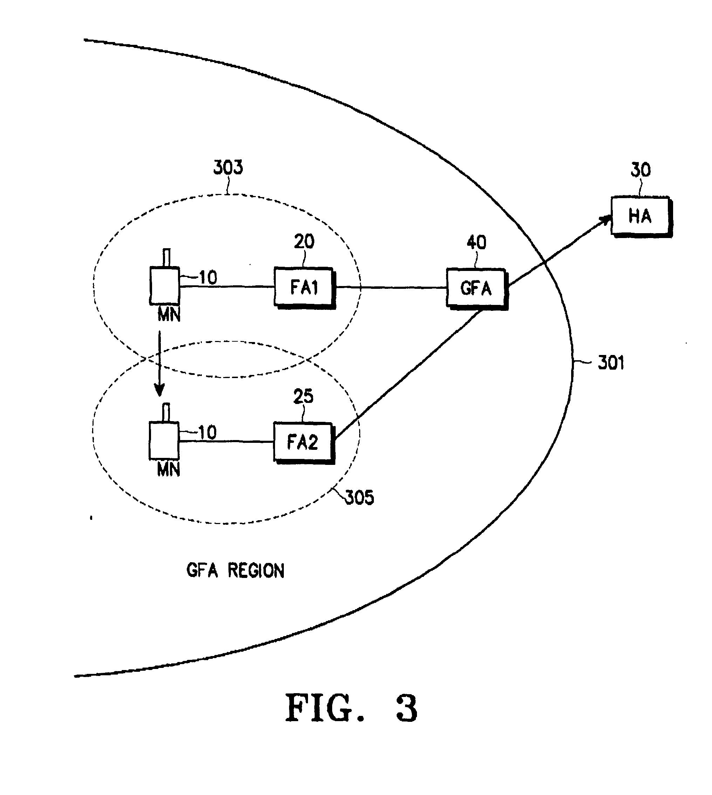

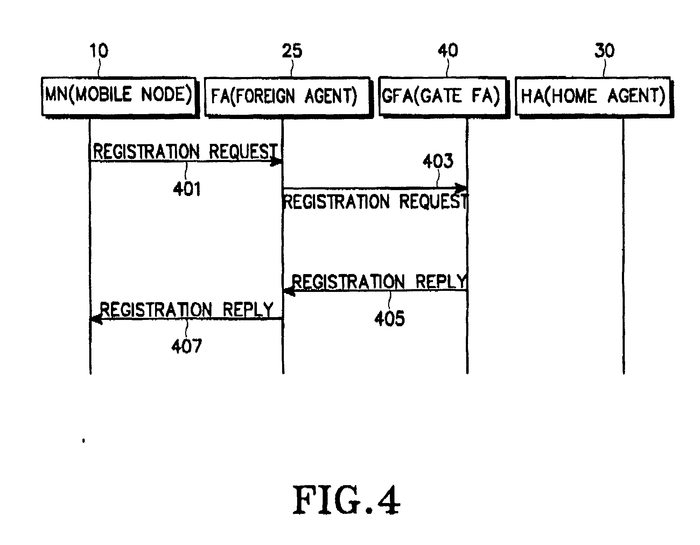

Now, with reference to FIGs. 3 and 4, a description will be made of an operation performed when the mobile node 10 moves from the original foreign agent to which it has belonged, to another foreign agent, after the location registration based on the regional tunnel management as described in FIG. 2.

FIG. 3 illustrates a state where a mobile node moves from a current foreign agent to another foreign agent in a communication system using the common Mobile IP. FIG. 4 illustrates a location registration procedure based on the regional tunnel management in the communication system using the common Mobile IP.

Referring to FIGs. 3 and 4, if a mobile node 10 has moved to a second foreign agent 25 having a region 305 after registering its location in a home agent 30 through a first foreign agent 20 having a region 303 and a gateway foreign agent 40 in the initial location registration procedure of FIG. 2, then the mobile station 10 transmits a Registration Request message to the second foreign agent 25 in step 401. Upon receiving the Registration Request message, the second foreign agent 25 stores information on the mobile node 10, and then transmits the Registration Request message to the gateway foreign agent 40 along with its address and the information on the mobile node 10, in step 403. The gateway foreign agent 40 has stored addresses of every foreign agent in its region, i.e., addresses of the first foreign agent 20 and the second foreign agent 25, and information on every mobile node connected to the foreign agents. Therefore, upon receiving the Registration Request message from the second foreign agent 25, the gateway foreign agent 40 determines whether there is a foreign agent having information on the mobile node 10, included in the received Registration Request message. As the result of determination, if there is a foreign agent having the information on the mobile node 10, the gateway foreign agent 40 can recognize that the mobile node 10 has moved from another foreign agent in its region, i.e., from the first foreign agent 20. Therefore, the gateway foreign agent 40 transmits a Registration Reply message for requesting the location of the mobile node 10 directly to the second foreign agent 25 in step 405, instead of transmitting the Registration Request message to the home agent 30. The second foreign agent 25 then transmits the Registration Reply message to the mobile node 10 in step 407.

Meanwhile, during data transmission to a correspondent node, the mobile node 10 operates as described in the conventional method. However, during data transmission to the mobile node 10, the correspondent node transmits data to the home agent 30 and the home agent 30 then retransmits the data to the gateway foreign agent 40. The gateway foreign agent 40 then retransmits the data to a foreign agent where the mobile node 10 is located, and then, the foreign agent retransmits the data to the mobile node 10. Therefore, in the regional tunnel management, the data transmission from the correspondent node to the mobile node 10 has a complicated data transmission procedure, compared with when the Mobile IP is used.

Presently, many efforts on development of the mobile communication system are made for commercialization of the IMT-2000 system. The IMT-2000 system is classified into an American synchronous system and a European asynchronous system. The Mobile IP technique is indispensable to the IMT-2000 system. However, applying the conventional regional tunnel management method used in the Mobile IP to the European asynchronous communication system may cause a waste of resources because of the characteristic of the foreign agent, i.e., because the foreign agent broadcasts its information.

Further, in the environment of the European asynchronous communication system, it is not preferable to provide a gateway foreign agent in a specific network. This is because the European asynchronous communication system uses a connection-oriented scheme. Thus, in the European asynchronous communication system, a gateway GPRS (General Packet Radio Service) support node (GGSN) serving as the gateway foreign agent may suffer from heavy congestion.

Internet Draft: Mobile IP Regional Registration; E. Gustafsson, A. Jonsson, C. Perkins; July 13, 2000; draft-ietf-mobileip-reg-tunnel-03.txt is directed at the mobile IP Regional Registration. Once the home agent has registered the GFA address as the care-of address of the mobile node, the mobile node may perform regional registration. When performing regional registrations the mobile node may either register a foreign agent care-of address or a co-located address with the GFA or another RFA. When the mobile node moves from one foreign agent to another foreign agent within the same visited domain it will then receive an Agent Advertisement from the new foreign agent. If the Agent Advertisement indicates that the visited domain supports regional registrations and that either the advertised GFA address is the same as the one the mobile node has registered as its care-of address during its last home registration, or the realm part of the newly advertised FA-NAI matches the FA-NAI advertised by the mobile node's previous foreign agent, then the mobile node can perform a regional registration with this foreign agent and GFA. The mobile node issues a regional registration request message to the new foreign agent. The regional registration request is addressed to the GFA. The care-of address should be sent to the address of the local foreign agent or else zero if the local foreign agent is not advertising its own care-of address. For each pending or current registration foreign agent maintains a visitor list entry. If reversed tunneling is being used, the visitor list must contain the address of the GFA. This is required in order for the foreign agent to tunnel datagrams sent by the mobile node to the GFA. The GFA then decapsulates the datagrams, re-encapsulates them and send them to the home agent.

It is the object of the present invention to provide a regional tunnel management method for minimizing message transmissions from a correspondent node to a mobile node in a mobile communication system.

This object is achieved by the subject-matter of the independent claims.

Preferred embodiments are the subject-matter of the dependent claims.

In the following preferred embodiments of this invention are described referring to the accompanying drawings, in which:
FIG. 1 illustrates a location registration procedure in a communication system using the common Mobile IP;
FIG. 2 illustrates an initial location registration procedure based on the regional tunnel management in the mobile communication system using the common Mobile IP;
FIG. 3 illustrates a state where a mobile node moves from a current foreign agent to another foreign agent in the communication system using the common Mobile IP;
FIG. 4 illustrates a location registration procedure based on the regional tunnel management in the communication system using the common Mobile IP;
FIG. 5 illustrates an initial location registration procedure based on the regional tunnel management in a European asynchronous communication system using the Mobile IP according to an embodiment of the present invention;
FIG. 6 illustrates a location registration procedure based on the regional tunnel management in the communication system using the Mobile IP according to another embodiment of the present invention;
FIG. 7 illustrates a state where a mobile node moves from a current GGSN to which it belongs, to another GGSN in the communication system using the Mobile IP according to another embodiment of the present invention;
FIG. 8 illustrates a regional tunnel management operation of a mobile node in the communication system using the Mobile IP according to another embodiment of the present invention;
FIG. 9 illustrates a regional tunnel management operation of a GGSN in the communication system using the Mobile IP according to another embodiment of the present invention; and
FIG. 10 illustrates a regional tunnel management operation of a home agent in the communication system using the Mobile IP according to another embodiment of the present invention.

A preferred embodiment of the present invention will be described herein below with reference to the accompanying drawings. In the following description, well-known functions or constructions are not described in detail since they would obscure the invention in unnecessary detail.

The term "gateway GPRS (General Packet Radio Service) support node (GGSN)" as used herein refers to a node constituting a UMTS (Universal Mobile Telecommunication System) network, and the GGSN supports a function of a foreign agent (FA) and a function of a gateway foreign agent (GFA) selectively or wholly. That is, the GGSN is connected to its mobile nodes and serves as an interface between the mobile nodes and an external network.

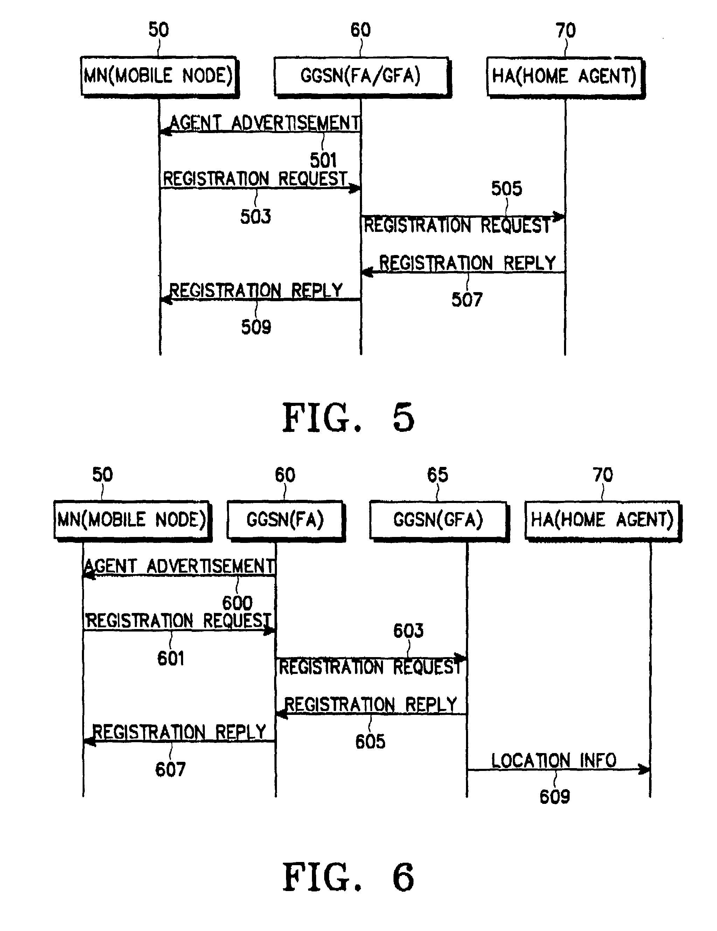

FIG. 5 illustrates an initial location registration procedure based on the regional tunnel management in a European asynchronous communication system using the Mobile IP according to an embodiment of the present invention. Referring to FIG. 5, if a mobile node (MN) 50 enters a region of a GGSN 60 in a UMTS network, a GTP (GPRS Tunneling Protocol) tunnel to the GGSN 60 is created in order to register location information of the mobile node 50 in a home agent (HA) 70.

The GTP tunnel is formed in the following method. The mobile node 50 wirelessly exchanges data with a radio network controller (RNC, not shown), one of the nodes constituting the UMTS network. As the RNC recognizes that the mobile node 50 desires to transmit data to an external network, the RNC reports this state to a serving GPRS support node (SGSN, not shown), one of the nodes constituting the UMTS network. The SGSN transmits the received information to the GGSN 60. The GGSN 60 also creates a tunnel for transmitting the data and reports this fact to the RNC.

Finally, the RNC creates a tunnel for transmitting data, and then informs the mobile node 50 that data exchange is available. After the GTP tunnel is formed in this process, the GGSN 60 transmits an Agent Advertisement message to the mobile node 50 in step 501. The Agent Advertisement message includes an IP address of the GGSN 60 and an I flag indicating a function of the GGSN 60. The I flag is reset when the GGSN 60 includes (supports) functions of both the foreign agent and the gateway foreign agent, and selectively performs the functions of (or selectively serves as) the foreign agent and the gateway foreign agent. If the GGSN 60 can service as the gateway foreign agent, GGSN 60 can detect the HA(home agent) 70. So, GGSN 60 registers the moving information of the MN to the HA(home agent) 70. If the I flag is not set, the GGSN 60 performs only the function of the foreign agent. The GGSN 60 transmits the Agent Advertisement message to the mobile node 50 using a broadcast message, and the Agent Advertisement message is transmitted through the created GTP tunnel. In addition, the I flag is set by a service provider. The present invention will be described with reference to a case where the GGSN 60 performs the functions of both the foreign agent and the gateway foreign agent.

Upon receiving the Agent Advertisement message from the GGSN 60, the mobile node 50 stores an address of the GGSN 60 and an address of the home agent 70, and then transmits a Registration Request message to the GGSN 60 in step 503. Here, the Registration Request message includes an address of the mobile node 50 and an address of the GGSN 60. The GGSN 60 transmits the Registration Request message to the home agent 70 in reply to a registration request from the mobile node 50, in step 505. The home agent 70 stores location information of the mobile node 50 by receiving the Registration Request message from the GGSN 60. The location information becomes the address of the GGSN 60 to which the mobile node 50 belongs. In reply to the Registration Request message from the GGSN 60, the home agent 70 transmits a Registration Reply message to the GGSN 60 in step 507, and upon receiving the Registration Reply message from the home agent 70, the GGSN 60 transmits the Registration Reply message to the mobile node 50 in step 509.

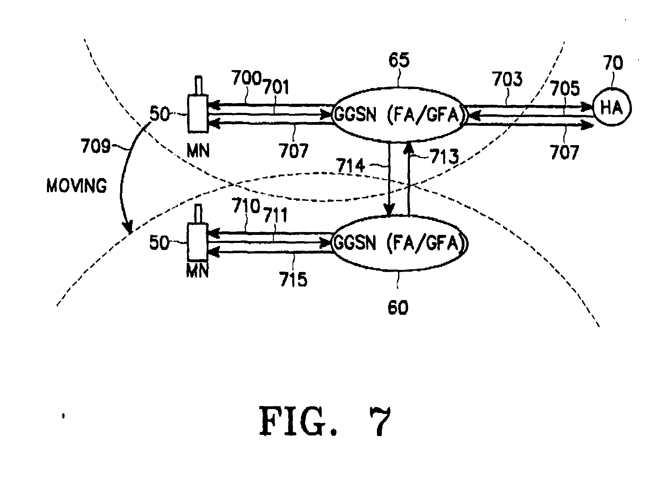

The initial location registration procedure for the mobile node 50 has been described with reference to FIG. 5. Next, a location registration procedure based on the regional tunnel management will be described with reference to FIGs. 6 and 7.

FIG. 6 illustrates a location registration procedure based on the regional tunnel management in the communication system using the Mobile IP according to another embodiment of the present invention. FIG. 7 illustrates a state where a mobile node moves from a current GGSN to which it belongs, to another GGSN in the communication system using the Mobile IP according to another embodiment of the present invention.

If the mobile node 50 moves from a region of a current GGSN 65 to a region of a new GGSN 60 in step 709 of FIG. 7, after performing the initial location registration procedure of FIG. 5, then the location registration procedure will be performed as shown in FIG. 6. The location registration procedure will be described in detail herein below with reference to FIG. 6.

If the mobile node 50 moves from the region of the GGSN 65 serving as a foreign agent to the region of the GGSN60, a GTP tunnel is formed between the GGSN 60 and the mobile node 50, and the mobile node 50 receives an Agent Advertisement message from the GGSN 60 serving as a new foreign agent in step 600, as described in the step 501 of FIG. 5. Upon receiving the Agent Advertisement message, the mobile node 50 transmits a Registration Request message to the GGSN 60 in step 601, without storing a gateway foreign address of the GGSN 60, included in the received Agent Advertisement message. Here, the reason why the mobile node 50 does not store the gateway foreign address of the GGSN 60 is because this address is identical to the address of the GGSN serving as the gateway foreign agent, which was received from the previously connected GGSN 65 and then stored in the mobile node 50. The Registration Request message transmitted in the step 601 includes an address of the GGSN serving as the gateway foreign agent. In reply to a registration request from the mobile node 50, the GGSN 60 transmits the Registration Request message to the GGSN 65 serving as the gateway foreign agent along with its unique address, in step 603. The GGSN 65 stores information on the mobile node 50 and the address of the GGSN 60 serving as the foreign agent, and then transmits a Registration Reply message to the GGSN 60 in step 605. The GGSN 60 then transmits the Registration Reply message to the mobile node 50 in step 607. After transmitting the Registration Reply message to the GGSN 60 in reply to the registration request from the GGSN60, the GGSN 65 transmits a Location Information message with address information of the GGSN 60 serving as the foreign agent to the home agent 70 in step 609. When there is data to be transmitted from the correspondent node to the mobile node 50, the home agent 70 can directly transmit the data to the GGSN 60 without passing through the GGSN 65 serving as the gateway foreign agent, because the home agent 70 has the address of the GGSN 60 serving as the foreign agent.

Shown in Table 1 is a format of the Location Information message transmitted from the GGSN 65 serving as the gateway foreign agent to the home agent 70 according to an embodiment of the present invention.

**Table 1**

| | |
|---|---|
| 01.... 78901........9 012................9012 | |

| Type | Reserved |
|---|---|
| Gateway Foreign Address | |
| Foreign Address | |

The Location Information message of Table 1 includes an address of the gateway foreign agent to which the mobile node belongs, and an address of the foreign agent to which the mobile node belongs. For example, an address of the GGSN 60 serving as the foreign agent for the mobile node 50 becomes an address of the foreign agent to which the mobile node 50 belongs, while an address of the GGSN 65 serving as the gateway foreign agent for the mobile node 50 becomes an address of the gateway foreign agent to which the mobile node 50 belongs.

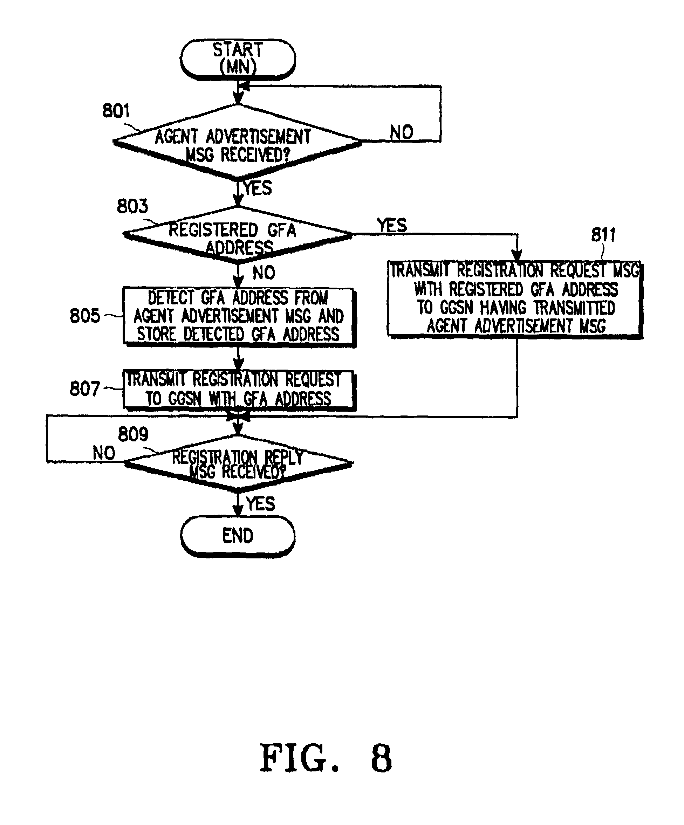

Next, an operation of the mobile node 50 performed based on the regional tunnel management method will be described with reference to FIG. 8.

FIG. 8 illustrates a regional tunnel management operation of a mobile node in the communication system using the Mobile IP according to another embodiment of the present invention. Referring to FIG. 8, a mobile node determines in step 801 whether an Agent Advertisement message is received. Upon receiving the Agent Advertisement message, the mobile node determines in step 803 whether an address of a GGSN serving as a gateway foreign agent is registered in it. If an address of the GGSN serving as the gateway foreign agent is registered, the mobile node transmits a Registration Request message to the GGSN having transmitted the Agent Advertisement message, along with the registered address of the GGSN, in step 811.

However, if it is determined in step 803 that an address of the GGSN serving as the gateway foreign agent is not registered in the mobile node, then the mobile node detects an address of the GGSN serving as the gateway foreign agent from the received Agent Advertisement message and stores the detected address, in step 805. Thereafter, in step 807, the mobile node transmits the Registration Request message to the GGSN. In step 809, the mobile node determines whether a Registration Reply message is received in response to the Registration Request message, and upon receiving the Registration Reply message, the mobile node ends the location registration procedure.

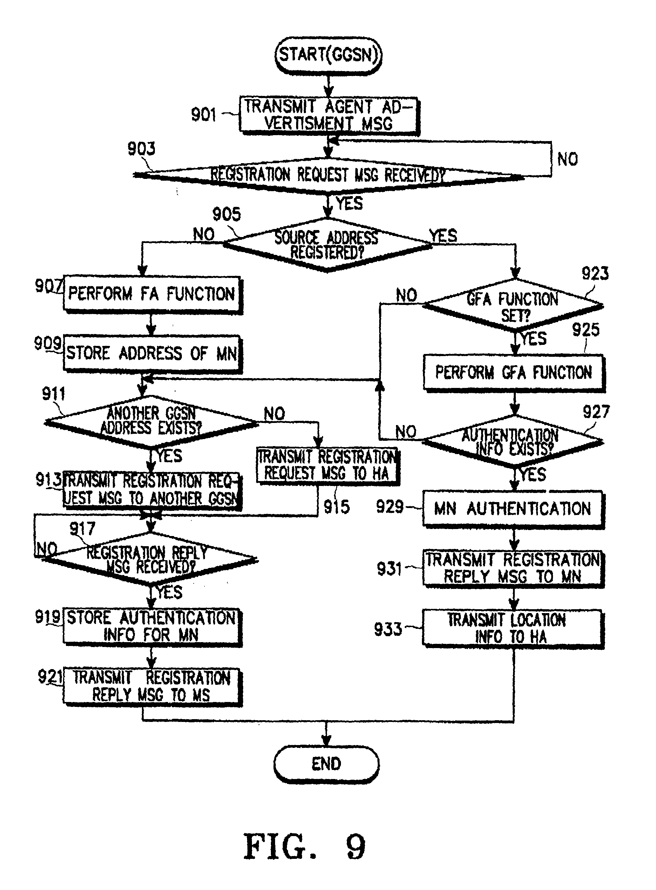

The regional tunnel management operation of the mobile node has been described with reference to FIG. 8. Next, a regional tunnel management operation of the GGSN will be described with reference to FIG. 9.

FIG. 9 illustrates a regional tunnel management operation of a GGSN in the communication system using the Mobile IP according to another embodiment of the present invention. Referring to FIG. 9, if a GTP tunnel is formed to a mobile node, a GGSN serving as a foreign agent and/or a gateway foreign agent transmits an Agent Advertisement message to the mobile node in step 901. After transmitting the Agent Advertisement message, the GGSN determines in step 903 whether a Registration Request message is received from a mobile node existing in its region. Upon receiving the Registration Request message from a mobile node in its region, the GGSN determines in step 905 whether the received Registration Request message is a Registration Request received from the mobile node or a Registration Request message received from another GGSN, e.g., a second GGSN. As the result of the determination, if the received Registration Request message is not a Registration Request message received from the mobile node, the GGSN ends the current procedure (not shown). However, if the received Registration Request message is a Registration Request message received from the mobile node, the GGSN determines whether a source address of the mobile node, included in the received Registration Request message, is registered in it. As the result of the determination, if the source address of the mobile node is registered, the GGSN proceeds to step 923. Otherwise, if the source address of the mobile node is not registered, the GGSN proceeds to step 907.

In step 907, the GGSN starts performing a function of the foreign agent. In step 909, the GGSN detects an address of the mobile node having transmitted the Registration Request message and stores the detected address. The GGSN determines in step 911 whether the Registration Request message includes an address of the second GGSN. As the result of the determination, if the Registration Request message includes an address of the second GGSN, the GGSN transmits the Registration Request message to the address of the second GGSN in step 913. However, if the Registration Request message does not include an address of the second GGSN, the GGSN transmits the Registration Request message to a home agent in step 915. After either step 913 or 915, the GGSN determines in step 917 whether a Registration Reply message is received from the element (the second GGSN or the home agent) to which the Registration Request message has been transmitted in step 913 or 915. Upon receiving the Registration Reply message, the GGSN stores authentication information for the mobile node in step 919, and transmits the received Registration Reply message to the mobile node in step 921. After transmitting the Registration Reply message to the mobile node, the GGSN ends the procedure.

However, if the source address of the mobile node is registered in the GGSN in the step 905, the GGSN analyzes an I flag in step 923, in order to determine whether a gateway foreign agent function is set. As the result of the analysis, if the gateway foreign agent function is not set, the GGSN proceeds to the step 911. Otherwise, if the gateway foreign agent function is set, the GGSN starts performing the gateway foreign agent function in step 925. Thereafter, the GGSN determines in step 927 whether there is authentication information for the mobile node having transmitted the Registration Request message. If there is the authentication information for the mobile node, the GGSN proceeds to step 929. Otherwise, if there is no authentication information for the mobile node, the GGSN proceeds to step 911. In step 929, the GGSN performs an authentication operation on the mobile node. In step 931, the GGSN transmits a Registration Reply message responsive to the Registration Request message to the mobile node. Here, the GGSN does not transmit the Registration Request message to the home agent. In step 933, if the Registration Request message has an address of the second GGSN, the GGSN transmits information on the second GGSN to the home agent, and then ends the procedure. This is to inform the home agent of an address, i.e., location information of a GGSN to which the mobile node is currently connected. The home agent can recognize a GGSN to which the mobile node is currently directly connected, based on the location information transmitted by the GGSN in the step 933. Therefore, when there is data to be transmitted from the correspondent node to the mobile node after the above procedure, it is possible to directly transmit the data to the mobile node through the second GGSN, instead of transmitting the data through the GGSN.

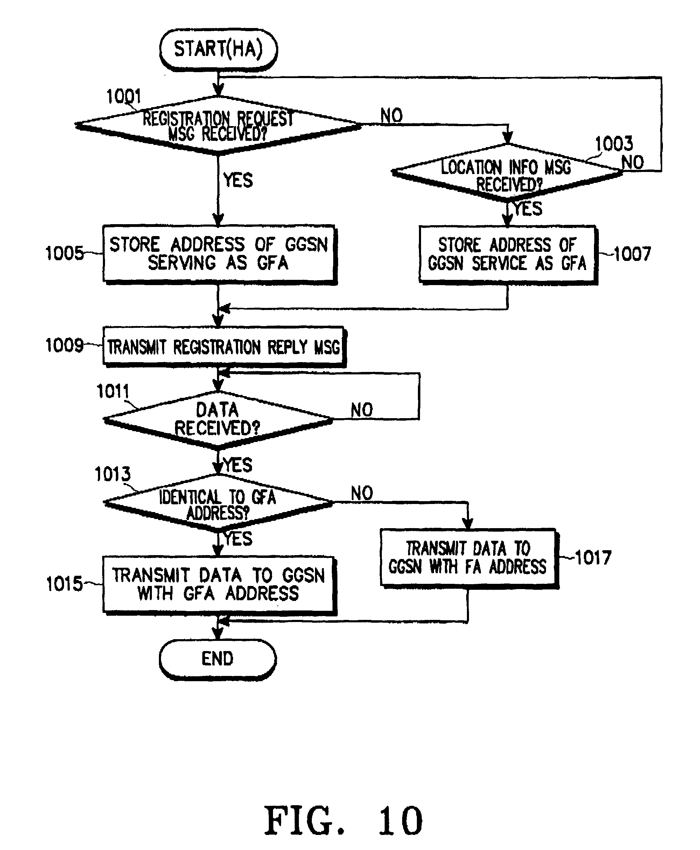

The regional tunnel management operation of the GGSN has been described with reference to FIG. 9. Next, a regional tunnel management operation of the home agent will be described with reference to FIG. 10.

FIG. 10 illustrates a regional tunnel management operation of a home agent in the communication system using the Mobile IP according to another embodiment of the present invention. Referring to FIG. 10, upon receiving a message, a home agent determines in step 1001 whether the received message is a Registration Request message received from a GGSN serving as a foreign agent. As the result of the determination, if the received message is a Registration Request message received from the GGSN serving as the foreign agent, the home agent proceeds to step 1005. Otherwise, if the received message is not a Registration Request, the home agent determines in step 1003 whether the received message is a Location Information message received from a GGSN serving as a gateway foreign agent. If the received message is the Location Information message, the home agent proceeds to step 1007.

In step 1005, the home agent stores an address of the GGSN serving as the gateway foreign agent, which corresponds to the GGSN serving as the foreign agent, included in the received Registration Request message. In step 1007, the home agent stores an address of the GGSN serving as the foreign agent, which corresponds to the GGSN serving as the gateway foreign agent having transmitted the received Location Information message. After registering the location of the mobile node in the steps 1001 to 1007, the home agent transmits a Registration Reply message to the GGSN in step 1009, and then determines in step 1011 whether data is received at the location-registered mobile node from the correspondent node. As the result of the determination, if data is received at the mobile node, the home agent determines in step 1013 whether a destination address of the data received from the correspondent node is identical to an address of the GGSN serving as the gateway foreign agent. If the destination address of the data is identical to an address of the GGSN serving as the gateway foreign agent, the home agent transmits the data received from the correspondent node to the GGSN serving as the gateway foreign agent in step 1015, and then ends the procedure. However, if the destination address of the data is not identical to an address of the GGSN serving as the gateway foreign agent, the home agent transmits the data received from the correspondent node to the GGSN serving as the foreign agent in step 1017, and then ends the procedure.

As described herein above, in transmitting data received from the correspondent node to the mobile node, the present invention directly transmits the data to the GGSN serving as the foreign agent, to which the mobile node is connected, without passing through the GGSN serving as the gateway foreign agent, thus simplifying the message transmission procedure. In addition, the present invention can remove the congestion by reducing the frequent location registration operations to the home agent, occurring when the mobile node moves from the GGSN serving as the foreign agent to another GGSN during the location registration. Furthermore, the GGSN serving as the foreign agent uses an Agent Advertisement message transmission method rather than the broadcasting method in indicating its region, thus contributing to efficient utilization of the resources.

## Claims

1. A regional tunnel management method in a GPRS-type communication system using Mobile IP, the GPRS-type communication system including a mobile node (50), a first GGSN (60) serving as a foreign agent for storing location information of the mobile node (50), a second GGSN (65) for storing location information coming from the first GGSN (60), and a home agent (70) connected to the second GGSN (65), for performing data communication with a correspondent node, the method comprising the steps of:
transmitting (601) a location registration request from the mobile node to the first GGSN, upon receiving (600) an Agent Advertisement message with an address of the second GGSN (65), said Agent Advertising message indicating that the first GGSN (60) supports said foreign agent function, said Agent Advertisement message being transmitted by the first GGSN (60);
transmitting (603) the location registration request from the first GGSN (60) to the second GGSN (65); and
registering by the second GGSN (65) an address of the first GGSN (60) to which the mobile node belongs, and then transmitting to the home agent a Location Information message indicating an address of the first GGSN (60) to which the mobile node belongs;
**characterized by**:
determining by the home agent (70) whether a destination address of data is identical to the address of the second GGSN (65), upon receiving data destined for the mobile node (50) from the correspondent node;
transmitting the data to the second GGSN (65), if the destination address of the data is identical to the address of the second GGSN (65), and
transmitting the data to the first GGSN (60) from the home agent (70), if the destination address of the data is not identical to the address of the second GGSN (65).

2. The method as claimed in claim 1, wherein the location registration request transmitted (601) by the mobile node includes the address of the first GGSN (60) to which the mobile node (50) belongs.

3. The method as claimed in claim 1 or 2, wherein the Agent Advertisement message (600) is transmitted through a tunnel between the mobile node and the first GGSN (60).

4. The method as claimed in one of claims 1 to 3, wherein the Location Information message includes the address of the first GGSN (60) and the address of the second GGSN (65).

5. The method as claimed in claim 1, further comprising the step of, upon receiving data destined for the mobile node for the correspondent node after receiving the Location Information message, transmitting the received data from the home agent to the second GGSN (65) to which the mobile node is currently connected.

## Patentansprüche

1. Regional-Tunnel-Management-Verfahren in einem Kommunikationssystem vom GPRS-Typ, unter Verwendung eines Mobile IP, wobei das Kommunikationssystem vom GPRS-Typ einen mobilen Knoten (50), einen ersten GGSN (60), der als ein Foreign Agent dient, zum Speichern von Lage-Informationen des mobilen Knotens (50), einen zweiten GGSN (65) zum Speichern von Lage-Informationen, die von dem ersten GGSN (60) kommen, und einen Home Agent (70), verbunden mit dem zweiten GGSN (65), um eine Datenkommunikation mit einem entsprechenden Knoten durchzuführen, umfasst, wobei das Verfahren die Schritte aufweist:
Senden (601) einer Lage-Registrierungs-Anforderung von dem mobilen Knoten zu dem ersten GGSN, unter Empfangen (600) einer Agent Advertisement Nachricht mit einer Adresse des zweiten GGSN (65), wobei die Agent Advertising Nachricht anzeigt, dass der erste GGSN (60) die Foreign Agent Funktion unterstützt, wobei die Agent Advertisement Nachricht durch den ersten GGSN (60) übertragen wird;
Senden (603) der Lage-Registrierungs-Anforderung von dem ersten GGSN (60) zu dem zweiten GGSN (65); und
Registrieren, durch den zweiten GGSN (65), einer Adresse des ersten GGSN (60), zu dem der mobile Knoten gehört, und dann Senden zu dem Home Agent einer Lage-Informations-Nachricht, die eine Adresse des ersten GGSN (60) anzeigt, zu dem der mobile Knoten gehört;
**gekennzeichnet durch**:
Bestimmen **durch** den Home Agent (70), ob eine Bestimmungs-Adresse von Daten identisch zu der Adresse des zweiten GGSN (65) ist, unter Empfangen von Daten, bestimmt für den mobilen Knoten (50) von dem entsprechenden Knoten;
Senden der Daten zu dem zweiten GGSN (65), falls die Bestimmungs-Adresse der Daten identisch zu der Adresse des zweiten GGSN (65) ist, und
Senden der Daten zu dem ersten GGSN (60) von dem Home Agent (70), falls die Bestimmungs-Adresse der Daten nicht identisch zu der Adresse des zweiten GGSN (65) ist.

2. Verfahren nach Anspruch 1, wobei die Lage-Registrierungs-Anforderung, gesendet (601) durch den mobilen Knoten, die Adresse des ersten GGSN (60) umfasst, zu dem der mobile Knoten (50) gehört.

3. Verfahren nach Anspruch 1 oder 2, wobei die Agent Advertisement Nachricht (600) über einen Tunnel zwischen dem mobilen Knoten und dem ersten GGSN (60) gesendet wird.

4. Verfahren nach einem der Ansprüche 1 bis 3, wobei die Lage-Informations-Nachricht die Adresse des ersten GGSN (60) und die Adresse des zweiten GGSN (65) umfasst.

5. Verfahren nach Anspruch 1, das weiterhin den Schritt, unter Empfangen von Daten, bestimmt für den mobilen Knoten, für den entsprechenden Knoten nach Empfangen der Lage-Informations-Nachricht, Senden der empfangenen Daten von dem Home Agent zu dem zweiten GGSN (65), zu dem der mobile Knoten momentan verbunden ist, aufweist.

## Revendications

1. Procédé de gestion de tunnel régional dans un système de communication de type GPRS utilisant le protocole Mobile IP, le système de communication de type GPRS incluant un noeud mobile (50), un premier GGSN (60) remplissant la fonction d'un agent étranger pour stocker une information de localisation du noeud mobile (50), un second GGSN (65) pour stocker une information de localisation provenant du premier GGSN (60), et un agent nominal (70) connecté au second GGSN (65), pour effectuer une transmission de données avec un noeud correspondant, le procédé comprenant les étapes suivantes :
on émet (601) une demande d'enregistrement de localisation, à partir du noeud mobile vers le premier GGSN, à la réception (600) d'un message d'Annonce d'Agent avec une adresse du second GGSN (65), ce message d'Annonce d'Agent indiquant que le premier GGSN (60) supporte la fonction d'agent étranger, le message d'Annonce d'Agent étant émis par le premier GGSN (60);
on émet (603) la demande d'enregistrement de localisation, à partir du premier GGSN (60) vers le second GGSN (65); et
on enregistre par le second GGSN (65) une adresse du premier GGSN (60) à laquelle le noeud mobile appartient, et on émet ensuite vers l'agent nominal un message d'Information de Localisation indiquant une adresse du premier GGSN (60) à laquelle le noeud mobile appartient;
**caractérisé en ce que**
on détermine par l'agent nominal (70) si une adresse de destination de données est identique à l'adresse du second GGSN (65), à la réception de données destinées au noeud mobile (50), provenant du noeud correspondant;
on émet les données vers le second GGSN (65), si l'adresse de destination des données est identique à l'adresse du second GGSN (65), et
on émet les données vers le premier GGSN (60) à partir de l'agent nominal (70), si l'adresse de destination des données n'est pas identique à l'adresse du second GGSN (65).

2. Procédé selon la revendication 1, dans lequel la demande d'enregistrement de localisation émise (601) par le noeud mobile comprend l'adresse du premier GGSN (60) à laquelle le noeud mobile (50) appartient.

3. Procédé selon la revendication 1 ou 2, dans lequel le message d'Annonce d'Agent (600) est émis à travers un tunnel entre le noeud mobile et le premier GGSN (60).

4. Procédé selon l'une des revendications 1 à 3, dans lequel le message d'Information de Localisation contient l'adresse du premier GGSN (60) et l'adresse du second GGSN (65).

5. Procédé selon la revendication 1, comprenant en outre l'étape, accomplie à la réception de données destinées au noeud mobile pour le noeud correspondant, après la réception du message d'Information de Localisation, consistant à émettre les données reçues à partir de l'agent nominal vers le second GGSN (65) auquel le noeud mobile est connecté au moment présent.
